# EUROPÄISCHE PATENTSCHRIFT

(11) **EP 0 860 476 B1**
(45) Veröffentlichungstag und Bekanntmachung des Hinweises auf die Patenterteilung: **29.11.2006**
(21) Anmeldenummer: 98102199.1
(22) Anmeldetag: 09.02.1998
(51) Int. Cl.: C09C 3/04, C09C 1/00, C09C 1/58, C04B 14/02, C09D 7/12, C08K 9/08, D21H 17/67, D21H 19/38

(54) **Anorganische Pigmentgranulate, Verfahren zu ihrer Herstellung und Ihre Verwendung**
Inorganic pigment granulates, process for their preparation and their use
Granulés de pigments inorganiques, procédé pour leur préparation et leur utilisation

(30) Priorität: 21.02.1997 DE 19706899
(43) Veröffentlichungstag der Anmeldung: 26.08.1998
(73) Patentinhaber: LANXESS Deutschland GmbH, 51369 Leverkusen (DE)
(72) Erfinder: Linde, Günter, Dr., 47800 Krefeld (DE); Eitel, Manfred, Dr., 47906 Kempen (DE); Schmidt-Park, Olaf, Dr., 47800 Krefeld (DE); Bütje, Kai, Dr., 47229 Duisburg (DE)

(56) Entgegenhaltungen:
- EP-A- 0 650 939
- EP-A- 0 802 241
- EP-A- 0 802 242
- WO-A-87/07595
- DE-A- 4 345 168

## Beschreibung

Die vorliegende Erfindung betrifft Granulate aus anorganischen Pigmenten, ein Verfahren zu ihrer Herstellung unter Verwendung von mehreren Hilfsmitteln durch Kompaktierung sowie ihre Anwendung in vielen technischen Bereichen.

Die Verwendung von Pigmentgranulaten aus Gründen der Arbeitshygiene, wie Staubfreiheit und Toxizität, sowie der verbesserten Handhabung (Fließ- und Dosierverhalten) hat auch bei Massenprodukten wie anorganischen Pigmenten in den letzten Jahren stark zugenommen. Bekannt sind Sprüh- und Aufbaugranulate. Allerdings erfolgt bei der Sprühgranulation eine Versprühung aus wäßriger Suspension bzw. bei der Aufbaugranulation z.B. in Mischern oder auf Drehtellern ein Aufbau mit anschließendem Trocknungsschritt. Diese Vorgehensweisen erfordern einen erhöhten Energieeinsatz. Kompaktierverfahren als billige Granulatherstellungsverfahren für Massenprodukte erfordern wiederum entweder hohe Drücke oder die Verwendung von Bindemitteln, so daß die dabei erhaltenen Granulate im allgemeinen nur für spezielle Anwendungsebiete, z.B. in Bau- oder Kunststoffen oder in Dispersionsfarben, geeignet sind.

Sprühtrocknungsverfahren zur Herstellung von Granulaten zum Einfärben von Beton gehen von Pigmentsuspensionen unter Verwendung von Bindemitteln aus. Entsprechende Verfahren sind in verschiedenen Schutzrechten beschrieben. Dabei werden wasserlösliche Bindemittel verwendet. So werden in DE-A-36 19 363, EP-A-0 268 645 und EP-A-0 365 046 organische Substanzen, wie z.B. Ligninsulfonate, Formaldehydkondensate, Gluconsäuren und sulfatierte Polyglykolether, eingesetzt, während gemäß DE-A-39 18 694 und US-A-5 215 583 anorganische Salze, wie z.B. Silikat und Phosphat, verwendet werden. Eine Kombination von Sprüh- und Aufbaugranulation ist in EP-A-0 507 046 beschrieben. In DE-A-36 19 363 und EP-A 0 268 645 werden Kompaktierverfahren sogar ausdrücklich ausgenommen, da durch die Anwendung von Druck ein zu starker Zusammenhalt der Teilchen erreicht wird, so daß zwar eine gute Transportstabilität, gleichzeitig aber auch erniedrigte Dispergiereigenschaften der Granulate bewirkt werden.

In EP-A-0 257 423 und DE-A-38 41 848 wird die Srühgranulation unter Zusatz von Polyorganosiloxanen als hydrophobe, lipophile Zusatzstoffe beschrieben. Der erwähnte Zerstäubungstrockner führt im allgemeinen zu kleinen Teilchengrößen, das heißt hohem Feinanteil. Ein wesentlicher Anteil des Materials aus dem Trockner kann daher nicht direkt als Granulat eingesetzt werden, sondern muß als Feinanteil in einem Filter zurückgehalten und in den Prozeß zurückgeführt werden. Die hydrophobierende Nachbehandlung führt bei sprühgranulierten Produkten zu einem sehr gut fließenden, aber außerordentlich stark staubenden Granulat.

Kompaktier- oder Preßverfahren führen bei hohen Preßkräften zu stabilen, aber schlecht dispergierbaren Granulaten, und bei niedrigen Preßkräften entsteht ein zu hoher Staubanteil, so daß die Ausbeute schlecht ist. Dem entgegen wirken Bindemittel oder Dispergiermittel, die sowohl eine verbesserte Haftung der Pigmentteilchen aneinander als auch eine abstoßende, stabilisierende Wirkung bei der Einarbeitung in ein bestimmtes Medium, wie beispielsweise Beton, Asphalt, Kunststoff oder Dispersionsfarben, hervorrufen.

Aus DE-A-42 14 195 ist ein Verfahren zur Einfärbung von Asphalt mit anorganischen Pigmentgranulaten bekannt, wobei Öle als Bindemittel verwendet werden. Die Granulate werden durch ein einfaches Granulationsverfahren hergestellt.

In DE-A-43 36 613 und DE-A-43 36 612 werden anorganische Pigmentgranulate aus Pigmenten durch Abmischung mit Bindemitteln, Kompaktierung, Schroten und abschließender Aufgranulierung hergestellt. Diese Granulate sind durch hydrophobe Bindemittel für den Einsatz in Kunststoffen optimiert bzw. durch Zusatz von Dispergiermitteln im Hinblick auf wäßrige Systeme verbessert worden.

Durch spezielle Herstellungsverfahren und mit Bindemitteln mit spezifischen Eigenschaften wurden so Granulate hergestellt, die für den jeweiligen einzelnen Einsatzbereich optimiert wurden.

Aufgabe der vorliegenden Erfindung war es daher, universell einsetzbare, anorganische Pigmentgranulate zur Verfügung zu stellen und mit einem einfachen, preiswerten, leicht ausführbaren Granulationsverfahren aus Massenprodukten, wie Pigmenten, diese Granulate herstellen zu können, so daß diese neuen Produkte in verschiedenen technischen Anwendungsbereichen erfolgreich eingesetzt werden können.

Diese Aufgabe konnte durch die erfindungsgemäßen Granulate, die mit speziellen Kombinationen mehrerer Hilfsmittel hergestellt werden, sowie durch ein Verfahren zu ihrer Herstellung gelöst werden.

Gegenstand der Erfindung sind anorganische, kompaktierte Pigmentgranulate mit einem mittleren Durchmesser von 50 bis 1000 µm, bevorzugt von 100 bis 800 µm, besonders bevorzugt von 100 bis 700 µm, einer Schüttdichte von 0,2 bis 1,8 g/cm³, bevorzugt 0,4 bis 1,5 g/cm³, und einem Wassergehalt von höchstens 3 Gew.-%, bezogen auf Pigment, bestehend aus den entsprechenden technischen, anorganischen Pigmentpulvern und Hilfsmitteln aus den folgenden Gruppen a) bis c)
a) Polyalkylenglykole mit einem Molekulargewicht von <2000 und Alkylen = Ethylen oder Propylen,
b) Ligninsulfonate und
c) Celluloseether mit einer Viskosität von <1000 mPa·s in 2 gew.-%iger wäßriger Lösung bei 20°C,
in einer Menge von 0,1 bis 4 Gew.-%, bevorzugt von 0,1 bis 2 Gew.-%, je Hilfsmittel, bezogen auf Pigment, wobei die Gesamtmenge an Hilfsmitteln 0,5 bis 5 Gew.-%, bevorzugt 2 bis 4 Gew.-%, nicht übersteigen soll, und wobei mindestens zwei und höchstens drei Hilfsmittel aus verschiedenen Gruppen sind.

Als technische, anorganische Pigmentpulver werden bevorzugt Eisenoxide, Titandioxid, Chromoxid, Bismutvanadat, Rutilmischphasenpigmente und Ruß eingesetzt.

Besonders gute anorganische Pigmentgranulate werden erhalten, wenn mindestens eines der Hilfsmittel in flüssiger Form vorliegt.

Celluloseether mit einer Viskosität von <500 mPa·s in 2 gew.-%iger wäßriger Lösung bei 20°C sind besonders bevorzugt.

Besonders bevorzugt wird Polyethylenglykol in Kombination mit Ligninsulfonat, bevorzugt Ammoniumligninsulfonat, und Carboxymethylcellulose oder deren Alkalimetallsalzen, eingesetzt.

Die Zweierkombinationen aus Ligninsulfonat und Polyethylenglykol bzw. aus Carboxymethylcellulose und Polyethylenglykol als Hilfsmittel sind besonders bevorzugt.

Die erfindungsgemäßen anorganischen, kompaktierten Pigmentgranulate können in allen technischen Anwendungsbereichen zur Einfärbung verwendet werden. Als Anwendungsbereiche sind die Einfärbung von Baustoffen, insbesondere Beton und Putze, von Lacken, von Kunststoffen, von Papier und von Asphalt sowie der Einsatz in Dispersionsfarben zu nennen.

Ein weiterer Gegenstand der Erfindung ist ein Verfahren zur Herstellung der erfindungsgemäßen anorganischen, kompaktierten Pigmentgranulate, welches dadurch gekennzeichnet ist, daß
a) ein oder mehrere Pigmentpulver mit Hilfsmitteln aus den Gruppen a) bis c)
   a) Polyalkylenglykole mit einem Molekulargewicht von <2000 und Alkylen = Ethylen oder Propylen,
   b) Ligninsulfonate und
   c) Celluloseether mit einer Viskosität von <1000 mPa·s in 2 gew.- %iger wäßriger Lösung bei 20°C,
   wobei mindestens zwei und höchstens drei Hilfsmittel aus verschiedenen Gruppen sind, in einer Menge von 0,1 bis 4 Gew.-% je Hilfsmittel, bezogen auf Pigment, vermischt werden,
b) diese Mischung einem Preß- oder Brikettierschritt unterworfen wird,
c) dieses gepreßte oder brikettierte Produkt zerkleinert wird,
d) das zerkleinerte Produkt in zwei oder mehrere Fraktionen aufgetrennt wird,
e) die Fraktion, in der mindestens 85 % der Teilchen größer 50 µm, bevorzugt größer 100 µm, sind oder zwischen 50 und 1000 µm, bevorzugt zwischen 100 und 1000 µm, liegen, als Produkt entnommen wird und gegebenenfalls in einem weiteren Schritt gerundet wird und die andere Fraktion bzw. die anderen Fraktionen aus dem Prozeß ausgeschleust oder zurückgeführt werden.

Das erfindungsgemäße Kompaktierverfahren mit Zerkleinerung und Auswahl des geeigneten Teilchengrößenbereichs durch Abtrennung bzw. Verformung ist ein kostengünstiges, leicht anzuwendendes Verfahren zur Granulierung von pulverförmigen anorganischen Pigmenten, insbesondere dann, wenn es sich um hohe Durchsätze von 0,5 bis 5 t/h handelt. Mit dem erfindungsgemäßen Verfahren wird bei niedrigen bis mäßigen Drücken ein ausreichend transportstabiles Granulat mit guter Dosierfähigkeit und guter Dispergierfähigkeit erhalten. Der Einsatz der spezifischen Bindemittelkombinationen beeinflußt die Eigenschaften der Granulate (Haftkräfte und Zusammenhalt des Pulvers) zusätzlich positiv. Darüber hinaus ist auch die Redispergierung der Granulate, die mit den entsprechenden Bindemittelkombinationen hergestellt werden, bei der Einarbeitung sehr gut.

In einer besonders bevorzugten Ausführungsform wird mindestens ein flüssiges Hilfsmittel bzw. ein Hilfsmittel in flüssiger Form eingesetzt. Durch diese Maßnahme kann man sich zusätzlich die Haftkräfte durch Flüssigkeitsbrücken zu Nutze machen.

Durch das erfindungsgemäße Kompaktierverfahren werden nahezu staubfreie Granulate bei mäßigen Preßkräften (z.B. 0,1 kN/cm bis 15 kN/cm auf einem Walzenkompaktor mit einem Rollendurchmesser von 20 cm) erhalten. Die Zerkleinerung kann beispielsweise über Siebgranulatoren mit einer entsprechenden Maschenweite der Siebe durchgeführt werden. Die Auftrennung der Granulate in unterschiedliche Fraktionen kann ebenfalls über Siebe erfolgen. Wegen der besseren Verarbeitbarkeit werden möglichst kleine Teilchen mit einem möglichst engen Korngrößenspektrum angestrebt.

Die erfindungsgemäßen Pigmentgranulate weisen eine gute relative Farbstärke und in Suspension eine gute Viskosität auf, erzeugen bei der Redispergierung in Suspension kaum Siebrückstand und zeigen ein gutes Absetzverhalten (ausreichende Stabilität der mit den erfindungsgemäßen Granulaten erzeugten Suspension). Eine Schaumbildung, die häufig beim Einrühren von Granulaten in Flüssigkeiten oder Suspensionen beobachtet wird, tritt beim Einsatz der erfindungsgemäßen Granulate nicht auf.

Die Erfindung soll anhand der nachfolgenden Beispiele näher erläutert werden.

Die Prüfung der Kunststoffdispergierbarkeit erfolgte nach einer der DIN 53 775, Teil 7 angenäherten Vorschrift: "Prüfung von Farbmitteln in weichmacherhaltigen Polyvinylchlorid (PVC-P)-Formmassen; Bestimmung der Dispergierhärte durch Walzen":

Das zu prüfende Pigment wurde bei 160 ± 5°C auf einem Mischwalzwerk in PVC dispergiert. Das erhaltene Walzfell wurde geteilt und die eine Hälfte anschließend durch Walzen bei Raumtemperatur erhöhten Scherkräften ausgesetzt. Als Maß für die Dispergierbarkeit gilt bei Buntpigmenten der Farbabstand ΔE nach CIELAB (DIN 5033, 6174) zwischen heiß- und kaltgewalztem PVC-Fell, bzw. bei Weißpigmenten die Differenz der Normfarbwerte Y (DIN 5033) zwischen heiß- und kaltgewalztem PVC-Fell. Ein gut dispergierbares Pigment ist schon bei geringen Scherkräften ausdispergiert, während zum Ausdispergieren eines schwer dispergierbaren Pigments die erhöhten Scherkräfte beim Walzen bei tiefer Temperatur notwendig sind. Daher gilt: je kleiner der Farbabstand ΔE bzw. die Differenz der Normfarbwerte Y, desto besser ist das Pigment dispergierbar. Insbesondere bei Granulaten kommt der Dispergierbarkeit eine große Bedeutung zu, da zuerst die Granulatteilchen zerteilt werden müssen, die dann im Kunststoff zu dispergieren sind. Angestrebt wird für Granulate eine gleich gute Dispergierbarkeit wie die entsprechender Pigmentpulver, so daß die Kenngrößen ΔE bzw. Y für Pulver und Granulat nicht wesentlich differieren sollen.

Als gut dispergierbar gilt ein ΔE von <1,0 Einheiten als befreidigend dispergierbar, ein ΔE von 1 bis 2 Einheiten,.

Die Prüfung der Dispergierbarkeit für Baustoffe erfolgte in Zementmörtel über die Farbstärkenmessung an mit Weißzement hergestellten Prismen bei folgenden Daten:

Zement-Quarzsand-Verhältnis 1:4, Wasser-Zement-Wert 0,35, Pigmentierungshöhe 1,2 %, bezogen auf Zement, verwendeter Mischer von RK Toni Technik, Berlin mit 5 1-Mischschüssel, Bauform 1551, Drehzahl 140 U/min, Ansatz: 500 g Zement.

Nach 100 Sekunden wurden 3 Mischungsproben (300 g) entnommen und Probekörper (5 x 10 x 2,5 cm) unter Druck hergestellt (300 bar). Härtung der Probekörper: 24 Std. bei 30°C und 95 % rel. Luftfeuchte mit anschließendem Trocknen 4 Stunden bei 60°C. Farbdatenmessung über Dataflash 2000, Datacolor International, Köln, 4 Meßpunkte je Stein, pro Pigmentmischung 12 Meßpunkte. Die erhaltenen Mittelwerte wurden mit den Werten einer Referenzprobe verglichen. Beurteilt wurden der Farbabstand E_{ab} und die Farbstärke (Referenzprobe = 100 %) (DIN 5033, DIN 6174). Die Dispergierbarkeit wurde als gut bezeichnet bei einem Farbstärkenunterschied bis 5 % gegenüber der Referenzprobe, als befriedigend bei einem Unterschied bis 10 %.

Die Abprüfung der Dispergierbarkeit in Asphalt erfolgte nach folgendem Verfahren: Das Pigment/Pigmentgranulat wurde in einem beheizbaren Labormischer (Rego-Mischer) zusammen mit einem Straßenbaubitumen des Typs B 80 (Handelsprodukt der Shell AG) und Zuschlagstoffen 60 Sekunden lang bei 180°C gemischt. Mit der Mischung wurden Prüfkörper nach Marshall hergestellt ("The Shell Bitumen Handbook, Shell Bitumen U.K., 1990, S. 230 - 232). Farbtonunterschiede wurden beurteilt (Minolta Chromameter II, Normlichtart C, Cielab-System, DIN 5033, DIN 6174) durch Vergleich der Rotwerte a* gegenüber einem Referenzprüfkörper mit Pigmentpulver. Unterschiede n den a*-Werten kleiner 0,5 Einheiten sind visuell nicht unterscheidbar.

Die Prüfung des Fließverhaltens erfolgte durch Beurteilung des Auslaufverhaltens aus einem Trichter mit 100 ml Volumen mit 6 mm Öffnung in Anlehnung an ASTM-Test D 1200 - 88. Das Fließverhalten wurde als sehr gut bezeichnet, wenn das Material frei ausläuft. Fließt das Granulat nach einmaligem Klopfen, wurde das Fließverhalten als gut bezeichnet, fließt es nur mit mehrfachem Klopfen, wurde das Fließverhalten als mäßig betrachtet.

Die Siebanalysen erfolgten auf einem VA-Sieb nach DIN 4188 mit 250 µm und 800 µm Maschenweite auf einer Luftstrahlsiebmaschine Typ Rhewum LPS 200 MC. Es wurden ca. 20 g der zu prüfenden Probe eingesetzt. Das Feingut wurde während einer Laufzeit von 1 Minute abgesaugt und die Menge des Grobanteils auf dem Sieb zurückgewogen.

Der Siebrückstand und die Viskosität einer wäßrigen Eisenoxidsuspension wurde folgendermaßen bestimmt:
600 g des zu prüfenden Pigments wurden mittels Labordissolver bei 2500 bis 3000 Upm (Dissolverscheibe 0 35 mm) in 400 g vorgelegtes Wasser eingearbeitet. Anschließend wurde 5 min bei 2500 bis 3000 Upm nachdispergiert. Dann wurde der Siebrückstand folgendermaßen bestimmt:
200 g der Suspension wurden auf ein 45 µm Prüfsieb überführt. Im Anschluß wurde mit einem nicht zu stark fließendem Wasserstrahl gewaschen, bis das ablaufende Wasser nicht mehr getrübt war. Der Rückstand wurde bei 105°C 1 Stunde getrocknet und ausgewogen. Die Viskositätsbestimmung erfolgte mittels Brookfield-Viskosimeter.

Zur Bestimmung des Absetzverhaltens wurden 200 g des zu prüfenden Pigmentgranulates mittels Laborrührer bei 800 bis 1000 Upm (Propellerrührer Ø 40 mm) in 200 g vorgelegtes Wasser eingearbeitet und 10 min bei 800 bis 1000 Upm nachdispergiert. Anschließend wurde ein 100 ml-Messzylinder mit der Suspension gefüllt und täglich abgelesen. Angegeben wurde das Volumen der überstehenden Lösung.

### Beispiel

50 kg Eisenoxidpigment (Bayferrox^{®} 130; Handelsprodukt der Bayer AG) werden in einem Mischer vorgelegt, der entsprechende Zusatz zugegeben und 15 Minuten gemischt. Anschließend wird die Mischung mit einer Preßkraft (1,3 bzw. 4 KN/cm) bei konstanter Walzendrehzahl über einen Walzenkompaktor Typ L200/50 P der Fa. Bepex (Leingarten) kompaktiert.

Die Aufgabe auf den Kompaktor erfolgt mittels Dosierschnecke, um eine konstante Produktzufuhr sicherzustellen. Die anfallenden Schülpen werden über einen Schroter Typ MGI-314 der Fa. Frewitt (Fribourg/Schweiz) zerkleinert. Im Anschluß wird das geschrotete Material über ein Sieb (Maschenweite 300 µm) abgesiebt. Die Aufgabe auf das Sieb erfolgt über Schüttelrinne mit ca. 40 kg/h.

Das entstehende Granulat hat eine Teilchengröße von 300 bis 1000 µm, mit einem durchschnittlichen Anteil von 60 - 90 % für Teilchen zwischen 300 und 800 µm.

Die Eigenschaften der Granulate sind den nachfolgenden Tabellen zu entnehmen.

**Tabelle 1**

| VersNr | Zusatz jeweils 1 Gew.-% | Granulat > 300 µm [%] | Siebanalyse [Gew.-%] | | | Auslaufzelt [s] | Verflüssigung (60 % Festst) | | | Disperg. in Baustoff rel. Farbst [%] | Absetzverhalten (50 %ige Suspension) [ml] | | Disperg. in Asphalt | Disperg. in Kunststoff Heiß-Kaltwalz-test ΔE 0,6 |
|---|---|---|---|---|---|---|---|---|---|---|---|---|---|---|
| | | | 0-250 µm | 250-800 µm | > 800µm | | Visk. [mPa*s] | Siebrückstand [%] | Schaumbildung | | 1. Tag | 5. Tag | | |
| 1 | Pulver | --- | --- | --- | --- | läuft nicht | 970 | 0,0 | nein | 100 Referenz | 86 | 86 | 0,0 Referenz | 0,0 |
| 2 | ohne Zusatz | 61,9 | 12,7 | 76,2 | 11,1 | 33 mäßig | 390 | 0,0 | nein | 95 | ca. 90* | ca. 90* | | 0,7 |
| 3 | PEG 400 | 58,1 | 4,0 | 84,3 | 11,7 | 29 mäßig | 220 | 0,0 | nein | 96 | ca. 80* | ca. 90* | - | - |
| 4 | Walocel CRT 30 P | 47,9 | 10,6 | 86,0 | 3,4 | läuft nicht | 350 | 0,2 | nein | 98 | 9,5 | 26 | - | - |
| 5 | PEG 400 Wanin AM Walocel CRT1 000P | 66,7 | 8,4 | 81,4 | 10,2 | 30 mäßig | >2000 | 0,0 | nein | 100 | - | - | - | - |
| 6 | PEG 400 Walocel CRT 30 P | 60,5 | 2,3 | 88,3 | 10,4 | 30 gut | 340 | 0,2 | nein | 99 | 3 | 17 | 0,3 | 0,3 |
| 7 | PEG 400 Walocel VPC 32104P Wanin AM | 58,3 | 12,3 | 87,7 | 8,6 | 31 mäßig | 600 | 0,0 | nein | 101 | - | - | --- | --- |
| 8 | PEU 400 Walocel CRT 30P Wanin AM | 55,5 | 6,4 | 83,4 | 10,2 | 31 gut | 460 | 0,5 | nein | 98 | 3 | 8,5 | 0,1 | 0,5 |

| | | | | | | | | | | | | | | |
|---|---|---|---|---|---|---|---|---|---|---|---|---|---|---|
| Preßkraft: 1,3 kN/cm Wanin AM - Ammoniumligninsulfonat, Handelsprodukt der Fa. Lignotech Walocel CRT 30P- Carboxymethylecellulose, Viskosität: 30mPa*s in 2 %-iger wäßriger Lösung bei 20°C Viskosimeter nach Haake (Typ ^{®}Rotovislo RV 100), Handelsprodukt der Wolff Walsrodc AG PEG 400 - Polyethylenglykol, Molekulargewicht 400, Handelsprodukt der Hoechst AU Walocel CRT 1000 P-Carboxymethylcellulose, Viskosität: 1000 mPa*s in 2 %-iger wäßriger Lösung bei 20°C(Typ ^{®}Rotovisko RV100), Produkt der Wolff Walsrode AG Walocel VP C 32 104 P-Carboxymethylcellulose, Viskosität 5 mPa*s in 2 %-iger wäßriger Lösung bei 20°C(Typ ^{®}Rotovislo RV 100), Produkt der Wolff Walsrode AG *uberstehende Phase stark getrübt, Bodensatzbildung | | | | | | | | | | | | | | |

**Tabelle 2**

| VersNr | Zusatz jeweils 1 Gew.-% | Granulat 300 µm [%] | Siebanalyse [Gew.-%] | | | Auslauf -zeit [sec.] | Verflüssigung (60 % Festst.) | | | Disperg. in Baustoff rel. Farbst. [%] | Disperg. in Asphalt Δa* | Disperg. in Kunststoff Heiß-Kaltwalztest ΔE |
|---|---|---|---|---|---|---|---|---|---|---|---|---|
| | | | 0 - 250 µm | 250 - 800 µm | > 800 µm | | Visk. [mPa*s] | Siebrückstand [%] | Schaumbildung | | | |
| 1 | Pulver | --- | --- | --- | --- | lauft nicht | 970 | 0,0 | nein | 100 Referenz | 0,0 Referenz | 0,6 |
| 2 | ohne Zusatz | 65,3 | 10,0 | 73,6 | 16,4 | 30 mäßig | 700 | 0,0 | nein | 84 | - | - |
| 3 | Wanin AM | 70,5 | 3,3 | 81,5 | 15,2 | 29 mäßig | 360 | 0,5 | nein | 84 | - | - |
| 4 | PEG 400 Wanin AM | 71,4 | 2,6 | 72,9 | 24,5 | 29 gut | 300 | 0,2 | nein | 91 | --- | --- |
| 5 | PEG 400 Walocel CRT 30P Wanin AM | 69,6 | 4,9 | 77,9 | 17,2 | 28 gut | 520 | 0,0 | nein | 93 | 0,4 | 0,2 |

| | | | | | | | | | | | | |
|---|---|---|---|---|---|---|---|---|---|---|---|---|
| Preßkraft 4 kN/cm Wanin AM - siehe Tabelle 1 Walocel CRT 30P - siehe Tabelle 1 PEG 400 - siehe Tabelle 1 | | | | | | | | | | | | |

## Patentansprüche

1. Anorganische, kompaktierte Pigmentgranulate mit einem mittleren Durchmesser von 50 bis 1000 µm, einem Wassergehalt von höchstens 3 Gew.-%, bezogen auf Pigment, und einer Schüttdichte von 0,2 bis 1,8 g/cm³ bestehend aus den entsprechenden technischen, anorganischen Pigmentpulvern und Hilfsmitteln aus den folgenden Gruppen a) bis c)
a) Polyalkylenglykole mit einem Molekulargewicht von <2000 und Alkylen = Ethylen oder Propylen,
b) Ligninsulfonate und
c) Celluloseether mit einer Viskosität von <1000 mPa·s in 2 gew- %iger wäßriger Lösung bei 20°C,
in einer Menge von 0,1 bis 4 Gew.-% je Hilfsmittel, bezogen auf Pigment, wobei die Gesamtmenge an Hilfsmitteln 0,5 bis 5 Gew.-% nicht übersteigen soll, und wobei mindestens zwei und höchstens drei Hilfsmittel aus verschiedenen Gruppen sind.

2. Anorganische Pigmentgranulate gemäß Anspruch 1, **dadurch gekennzeichnet, daß** als technische Pigmentpulver Eisenoxide, Titandioxid, Chromoxid, Bismutvanadat, Rutilmischphasenpigmente und Ruß eingesetzt werden.

3. Anorganische Pigmentgranulate gemäß Anspruch 1 oder 2, **dadurch gekennzeichnet, daß** mindestens eines der Hilfsmittel in flüssiger Form vorliegt.

4. Anorganische Pigmentgranulate gemäß einem oder mehreren der Ansprüche 1 bis 3, **dadurch gekennzeichnet, daß** als Hilfsmittel Polyethylenglykol, Ligninsulfonat und Carboxymethylcellulose vorliegen.

5. Anorganische Pigmentgranulate gemäß einem oder mehreren der Ansprüche 1 bis 3, **dadurch gekennzeichnet, daß** als Hilfsmittel Ligninsulfonat und Polyethylenglykol vorliegen.

6. Anorganische Pigmentgranulate gemäß einem oder mehreren der Ansprüche 1 bis 3, **dadurch gekennzeichnet, daß** als Hilfsmittel Carboxymethylcellulose und Polyethylenglykol vorliegen.

7. Verfahren zur Herstellung der anorganischen, kompaktierten Pigmentgranulate gemäß den Ansprüchen 1 bis 6, **dadurch gekennzeichnet, daß**
a) ein oder mehrere Pigmentpulver mit Hilfsmitteln aus den Gruppen a) bis c)
a) Polyalkylenglykole mit einem Molekulargewicht von <2000 und Alkylen = Ethylen oder Propylen,
b) Ligninsulfonate und
c) Celluloseether mit einer Viskosität von <1000 mPa·s in 2 gew.-%iger wäßriger Lösung bei 20°C,
wobei mindestens zwei und höchstens drei Hilfsmittel aus verschiedenen Gruppen sind, in einer Menge von 0,1 bis 4 Gew.-% je Hilfsmittel, bezogen auf Pigment, vermischt werden,
b) diese Mischung einem Preß- oder Brikettierschritt unterworfen wird,
c) dieses gepreßte oder brikettierte Produkt zerkleinert wird,
d) das zerkleinerte Produkt in zwei oder mehrere Fraktionen aufgetrennt wird,
e) die Fraktion, in der mindestens 85 % der Teilchen größer 50 µm sind, oder zwischen 50 und 1000 µm liegen, als Produkt entnommen wird und gegebenenfalls in einem weiteren Schritt gerundet wird, die andere Fraktion bzw. Fraktionen aus dem Prozeß ausgeschleust oder zurückgeführt werden.

8. Verwendung der anorganischen Pigmentgranulate gemäß den Ansprüchen 1 bis 6 zur Einfärbung von Baustoffen, insbesondere Beton und Putze, Lacken, Kunststoffen, Papier, Asphalt und als Zusatz zu Dispersionsfarben.

## Claims

1. Inorganic compacted pigment granules with an average diameter of 50 to 1000 µm, a water content of 3 wt. % maximum, related to pigment, and a bulk density of 0.2 to 1.8 g/cm³, consisting of the corresponding technical inorganic pigment powders and auxiliary substances from the following groups a) to c)
a) polyalkylene glycols with a molecular weight of < 2000 and alkylene = ethylene or propylene,
b) lignin sulphonates and
c) cellulose ethers with a viscosity of < 1000 mPa·s in 2 wt. % aqueous solution at 20°C,
in a quantity of 0.1 to 4 wt. % per auxiliary substance, related to pigment, where the total quantity of auxiliary substances should not exceed 0.5 to 5 wt. %, and where at least two and not more than three auxiliary substances are from different groups.

2. Inorganic pigment granules according to Claim 1, **characterized in that** technical pigment powders used are iron oxides, titanium dioxide, chromium oxide, bismuth vanadate, rutile mixed phase pigments and carbon black.

3. Inorganic pigment granules according to Claim 1 or 2, **characterized in that** at least one of the auxiliary substances is present in liquid form.

4. Inorganic pigment granules according to one or more of Claims 1 to 3, **characterized in that** polyethylene glycol, lignin sulphonate and carboxymethylcellulose are present as auxiliary substances.

5. Inorganic pigment granules according to one or more of Claims 1 to 3, **characterized in that** lignin sulphonate and polyethylene glycol are present as auxiliary substances.

6. Inorganic pigment granules according to one or more of Claims 1 to 3, **characterized in that** carboxymethylcellulose and polyethylene glycol are present as auxiliary substances.

7. Process for producing inorganic compacted pigment granules according to Claims 1 to 6, **characterized in that**
a) one or more pigment powders are mixed with auxiliary substances from groups a) to c)
a) polyalkylene glycols with a molecular weight of < 2000 and alkylene = ethylene or propylene,
b) lignin sulphonates and
c) cellulose ethers with a viscosity of < 1000 mPa·s in 2 wt. % aqueous solution at 20°C,
where at least two and not more three auxiliary substances are from different groups, in a quantity of 0.1 to 4 wt. % per auxiliary substance, related to pigment,
b) this mixture is subjected to a compressing or briquetting step,
c) this compressed or briquetted product is crushed,
d) the crushed product is separated into two or more fractions,
e) the fraction in which at least 85% of the particles are greater than 50 µm or lie between 50 and 1000 µm is removed as product and optionally is rounded in a further step, and the other fraction or fractions are expelled from the process or recycled.

8. Use of inorganic pigment granules according to Claims 1 to 6 for colouring building materials, particularly concrete and plasters, lacquers, plastics, paper and asphalt and as an addition to emulsion paints.

## Revendications

1. Granulats de pigments inorganiques, compactés, présentant un diamètre moyen de 50 à 1 000 µm, une teneur en eau d'au plus 3% en poids, par rapport au pigment, et une densité apparente de 0,2 à 1,8 g/cm³, constitués par les poudres de pigments inorganiques industriels correspondants et les adjuvants des groupes a) à c) suivants
a) les polyalkylèneglycols présentant un poids moléculaire < 2 000 et alkylène = éthylène ou propylène,
b) les ligninesulfonates et
c) les éthers de cellulose présentant une viscosité < 1 000 mPa.s dans une solution aqueuse à 2% en poids à 20°C,
en une quantité de 0,1 à 4% en poids par adjuvant, par rapport au pigment, la quantité totale d'adjuvants ne dépassant pas 0,5 à 5% en poids et au moins deux et au plus trois adjuvants provenant de groupes différents.

2. Granulats de pigments inorganiques selon la revendication 1, **caractérisés en ce qu'**on utilise comme poudres de pigments inorganiques industriels les oxydes de fer, le dioxyde de titane, l'oxyde de chrome, le vanadate de bismuth, les pigments à phases mixtes de rutile et la suie.

3. Granulats de pigments inorganiques selon la revendication 1 ou 2, **caractérisés en ce qu'**au moins un des adjuvants se trouve sous forme liquide.

4. Granulats de pigments inorganiques selon l'une ou plusieurs des revendications 1 à 3, **caractérisés en ce que** les adjuvants sont le polyéthylèneglycol, la ligninesulfonate et la carboxyméthylcellulose.

5. Granulats de pigments inorganiques selon l'une ou plusieurs des revendications 1 à 3, **caractérisés en ce que** les adjuvants sont la ligninesulfonate et le polyéthylèneglycol.

6. Granulats de pigments inorganiques selon l'une ou plusieurs des revendications 1 à 3, **caractérisés en ce que** les adjuvants sont la carboxyméthylcellulose et le polyéthylèneglycol.

7. Procédé pour la préparation des granulats de pigments inorganiques, compactés selon les revendications 1 à 6, **caractérisé en ce que**
a) on mélange une ou plusieurs poudres de pigment avec des adjuvants des groupes a) à c)
a) les polyalkylèneglycols présentant un poids moléculaire < 2 000 et alkylène = éthylène ou propylène,
b) les ligninesulfonates et
c) les éthers de cellulose présentant une viscosité < 1 000 mPa.s dans une solution aqueuse à 2% en poids à 20°C,
au moins deux et au plus trois adjuvants provenant de groupes différents, en une quantité de 0,1 à 4% en poids par adjuvant par rapport au pigment,
b) on soumet ce mélange à une étape de compression ou de transformation en briquettes,
c) on broie ce produit.comprimé ou transformé en briquettes,
d) on sépare le produit broyé en deux fractions ou plus,
e) on prélève la fraction, dans laquelle au moins 85% des particules sont plus grosses que 50 µm, ou situées entre 50 et 1 000 µm, comme produit et elle est, le cas échéant, arrondie dans une autre étape, l'autre ou les autres fraction(s) étant évacuée(s) du procédé ou recyclée(s) dans le procédé.

8. Utilisation des granulats de pigments inorganiques selon les revendications 1 à 6 pour teindre des matériaux de construction, en particulier le béton et les enduits, les laques, les matériaux synthétiques, le papier, l'asphalte et comme additifs dans les encres de dispersion.
